# EUROPÄISCHE PATENTSCHRIFT

(11) **EP 1 684 042 B1**
(45) Veröffentlichungstag und Bekanntmachung des Hinweises auf die Patenterteilung: **12.10.2016**
(21) Anmeldenummer: 05000360.7
(22) Anmeldetag: 11.01.2005
(51) Int. Cl.: F28F 21/06, F28F 3/02, F28D 1/047, F28D 1/053, F28F 1/22

(54) **Heizkörper**
Radiator
Radiateur

(43) Veröffentlichungstag der Anmeldung: 26.07.2006
(73) Patentinhaber: Phoenix Metall GmbH, 77731 Willstätt (DE)
(72) Erfinder: Petrovic, Vladan, Prof.Dr., Kragujevac (YU); Danas, Goran, Dipl.-Ing., 34000 Kragujevac (YU); Quast, Klaus, 77855 Achern (DE); Rössler, Klaus, 77855 Achern (DE)
(74) Vertreter: Mierswa, Klaus

(56) Entgegenhaltungen:
- EP-A- 1 323 997
- WO-A-98/09127
- GB-A- 996 520
- US-A- 1 790 241
- US-A- 4 427 034
- PATENT ABSTRACTS OF JAPAN Bd. 005, Nr. 203 (M-103), 23. Dezember 1981 (1981-12-23) & JP 56 119497 A (BABCOCK HITACHI KK), 19. September 1981 (1981-09-19)

## Beschreibung

Die Erfindung betrifft Heizkörper, bestehend aus mehreren Rohrsegmenten, welche die Form einer Heizschlange oder eines Rohrregisters haben, wobei die Rohrsegmente in eingepresste Einprägungen von Lamellen eingelegt sind und Rohrsegmente und Lamellen flächig und stoffschlüssig durch Schweißen oder Kleben miteinander verbunden sind, wobei an der einen Stirnseite der Lamellen auf der Frontseite und/oder an der Hinterseite des Heizkörpers eine plane Platte kraftschlüssig, wie durch Punktschweißen, Verkleben oder eine andere Art der Verbindung, angeordnet ist, wobei die Rohrsegmente jeweils zwei einander zugewandte Lamellen aufweisen, deren Einprägungen an den den Rohrsegmenten zugewandten Stirnseiten ausgebildet sind.

Derartige Heizkörper sind aus GB 996 520 und WO 9809127 bekannt.
Nachteilig an den vorbekannten Heizkörpern ist, dass diese zur Wärmeabstrahlungsfläche nur eine relativ geringe Wärmeübergangsfläche bilden oder aufgrund von doppelt vorhandenen Rohrsegmente doppelte Prägungen an den Lamellen vorgesehen werden müssen, was die Herstellung komplizierter und teurer gestaltet.

Im Hinblick auf die ansteigenden Stahlpreise auf dem Weltmarkt und der hohen Lohnkosten stellt sich die Forderung an die produzierenden Unternehmen in der Heizkörperindustrie, neue innovative Lösungen zu erbringen, um die steigenden Produktionskosten im Rahmen zu halten. Die Heizkörperindustrie ist heutzutage gezwungen, zu niedrigen Preisen zu produzieren, wobei die Gefahr droht, dass die ganze Branche in einen finanziellen Einbruch geraten kann.

In der Patentschrift Nr. 04023770.3 vom 06.10.2004 ist eine neue Idee gegeben, wie man die Heizplatten bei der üblichen
Plattenheizkörperproduktion aus dünnem Blech (0,4 bis 0,8 mm) anfertigt und wie in den Einprägungen der Heizplatte eine Heizschlange auf geschickte Weise eingebaut wird, so dass das Heizungswasser durch die Heizschlange strömt und die Wärme aus dem Heizungskreislauf auf die Füllflüssigkeit, mit der die Heizplatte drucklos befüllt ist, übertragen wird.

Als Füllflüssigkeit wird das chemisch aufbereitete Wasser mit Zugabe von verschiedenen Inhibitoren eingesetzt, wodurch die Mischflüssigkeit chemisch gegen die Korrosion beständig ist. Der Betriebsdruck der Heizungsanlage wird nur auf das Heizelement beschränkt und der Druck bleibt im übrigen Heizkörper atmosphärisch. Gemäß dieser Erfindung besteht die Möglichkeit, das Heizelement in die übliche Heizplatte einzubauen, d.h. in der üblichen Produktion wird nichts geändert, jedoch werden die Schalen anstatt aus 1,25 mm Blech aus Blech 0,5 mm angefertigt.

Die Heizelemente können in verschiedener Form gestaltet werden, z.B. als Heizschlange oder aus Blechschalen 1,25 mm dick mit Einprägungen, die durch Punkt-Nahtschweißen wasserdicht miteinander verbunden werden.

Um den Sinn der neuen Erfindung zum Ausdruck zu bringen, liegt es nah, die Wärmeübergangsverhältnisse bei Standardheizplatten zu analysieren.

Bei der Standardheizplatte fließt das Heizungswasser durch den Verteilerkanal, durch die senkrechten Kanäle (Einprägungen) und anschließend durch den Sammelkanal zurück. Zwischen den eingeprägten Kanälen ist eine ebene Fläche vorgesehen, die dazu dient, die zwei Schalen durch Punktschweissen miteinander zu verbinden.

Die Plattenheizkörperschalen werden üblicher Weise aus Blech 1,25 mm Dicke angefertigt. Die beiden Schalen liegen aufeinander und werden durch Punktschweißen miteinander fest verbunden.

Die Wärme der Heizplatte wird an die Außenluft einerseits von den Wasserkanälen und andererseits von der ebenen Fläche aus dem Zwischenkanalbereich übertragen. Die Berührungsfläche zwischen zwei Schalen bleibt ungenutzt, weil die Innenflächen der beiden Schalen aufeinander liegen, sie bleiben im Sinne der Wärmeübertragung "tot". Die gesamte Dicke der beiden Schalen beträgt 2,5 mm und nur eine Hälfte der gesamten Fläche wird für die Wärmeübertragung genutzt. Wenn man von der Standardausführung eines Plattenheizkörpers ausgeht, bei dem üblicherweise der Zwischenabstand der Wasserkanäle 33,33 mm beträgt und wenn man beispielsweise berücksichtigt, dass bei einem Plattenheizkörper mit den Abmessungen Bauhöhe 600 mm und Baulänge 1000 mm ca. 30 Zwischenkanalabstände vorhanden sind, lässt sich ausrechnen, dass der Gewichtsanteil der Heizplatte in dem nur eine Hälfte der gesamt möglichen Fläche für die Wärmeübertragung genutzt wird, ca. 7 kg beträgt. Für einen Heizkörper mit zwei Heizplatten sind dann 14 kg der nicht optimal für die Wärmeübertragung genutzten Flächen vorhanden. Im Hinblick auf die zurzeit steigenden Stahlpreise liegt es nah, über diese Problematik nachzudenken. Hinzu kommt noch die Tatsache, dass diese Wasserkanalzwischenfläche auch aus 1,25 mm dickem Blech angefertigt werden muss, um dem Prüfdruck des Heizkörpers Stand zu halten.
Aufgabe der Erfindung ist es, die Bequemlichkeit der Strahlung zu optimieren.
Diese Aufgabe wird durch die Merkmale des Patentanspruchs 1 gelöst. Vorteilhafte Ausgestaltungen sind in den Ansprüchen 2 bis 4 beschrieben.

Die Erfindung sieht daher vor, anstatt der in der Heizschale eingeprägten Kanäle eine Heizschlange vorzusehen und dann die Wärme von der Heizschlange durch den Kontakt an die grosse Fläche, die aus dünnem Blech angefertigt wird, zu übertragen. Bei den Plattenheizkörpern sind die Lamellen diejenige große Fläche, die bei der Standardausführung der Plattenheizkörper durch Punktschweißung mit der Heizplatte fest verbunden werden.

Im Sinne dieser neuen Erfindung ist vorgesehen, dass die Lamellen mit der Heizschlange fest verbunden werden. Die Verbindung der Heizschlange mit der Lamelle erfolgt auf die Weise, dass auf der Stirnseite des Lamellenrippens ein Kanal eingeprägt wird, dessen Tiefe dem Rohrradius der Heizschlange entspricht.

Die Einprägungen in den Lamellenrippen spiegeln über die ganze Lamellenbreite eine Rohrhälfte wieder. Die Lamellen werden an den beiden Seiten der senkrechten Rohrsegmente bis zum Bogenradius angebracht. Von der Heizschlange wird die Wärme durch die Wärmeleitung auf die Lamelle übertragen. Um eine gute Wärmeleitung zu sichern, ist ein guter Kontakt zwischen der Heizschlange und der Lamelle von entscheidender Bedeutung. Dies kann auf mehrere Weisen durchgeführt werden. Zum einen kann durch das Punktschweißung der Lamelle ans Rohr ein zufriedenstellender Kontakt gesichert werden, zum anderen wird im Sinne dieser Erfindung die Möglichkeit vorgesehen, die Lamelle mit dem Rohr mittels eines Wärmeleitklebstoffes zu verkleben. Dafür sind einige Möglichkeiten gegeben, entweder den Klebstoff als Paste auf die zu verklebenden Flächen aufzutragen, die Verwendung flüssigen Klebstoffes oder wärmeleitendes Klebeband. Durch Verkleben der Heizschlange mit den Lamellen lassen sich enorme wirtschaftliche Vorteile bei der Heizkörperproduktion erzielen. Zum einen wird der Stromverbrauch wesentlich reduziert und zum anderen braucht man keine kostenaufwendige Ausrüstung für das Punktschweißung. Bekanntlich ist die Wärmeleitung durch Stahl groß und der Wärmeleitungskoeffizient des Stahles bewegt sich in der Größenordnung von 40 W/m K. Die von der Heizschlange entkoppelte Wärme wird auf Grund der Wärmeleitung durch die Lamelle transportiert und von dort aus wird die Wärme konvektiv auf die Raumluft übertragen.

Die Wärme wird von den beiden Seiten einer Lamelle an die Raumluft übertragen. Es gibt kein Überlappen der Flächen, d.h. die Ausnutzung der Lamellenfläche ist optimal.

Wegen der Stahleinsparung lassen sich die Lamellen aus Blechstärke 0,4 mm anfertigen, bei der Standardausführung ist eine Blechstärke 0,5 mm vorgesehen.

An der Stirnseite der Lamellen, sowohl an der Frontseite, als auch an der Hinterseite kann eine plane Platte durch Punktschweißung oder durch Verkleben angebracht werden. Die Wärme strömt von der Heizschlange durch die Lamellen an die vordere und hintere plane Platte. Die beiden planen Platten werden erwärmt und geben die Wärme durch die Konvektion und durch die Strahlung an die Raumluft ab.

Damit wird erreicht, dass die von der Frontseite nötige Strahlungswärme die Bequemlichkeit in der Wohnung vervollständigt. Mit den planen Platten werden zweierlei Vorteile erzielt und zwar werden teure Pressen sowie Presswerkzeuge eingespart und zum anderen wird im Vergleich zur Standardausrüstung das Design des Heizkörpers wesentlich verbessert.

Die Schalen der üblichen Plattenheizkörperproduktion können so gepresst werden, dass anstatt der üblichen Kanäle die Kanäle in Form eines Halbrohres eingeprägt werden, in denen eine Hälfte des Rohres eingelegt wird und an die andere Hälfte des Rohres wird die Lamelle angebracht. Die Schalen werden aus dünnem Blech (0,5 mm) gepresst. Wenn man zwei solche Schalen mit Lamellen zusammensetzt, bekommt man von Außen gesehen eine vollkommen identische Form des Heizkörpers wie beim Standard.

Anstatt der Heizschlange wird ein Rohrregister verwendet. Das Rohrregister besteht aus einem horizontal angeordnetem Verteil- und Sammelrohr und aus senkrecht, parallel zueinander verlaufenden Verbindungsrohren. Das Heizungswasser wird vom Verteilerrohr auf die senkrechten Verbindungsrohre verteilt und wird im Sammelrohr wieder zusammengeführt.

Die Anfertigung des Rohrregisters kann auf verschiedene Weise erfolgen, z.B. durch Verschweißen der senkrechten Rohre mit dem Verteiler- und Sammelrohr oder die Anfertigung auf die Weise, dass Verteiler- und Sammelrohr aus Kunststoff und die senkrechten Rohre aus Stahl angefertigt werden, wobei die senkrechten Stahlrohre in einem Spritzgusswerkzeug mit den Kunststoffrohren durch Spritzgussverfahren luftdicht miteinander verbunden werden. Es besteht die Möglichkeit, dass Verteiler und Sammelrohr sowie die senkrechten Verbindungsrohre aus Stahl angefertigt werden, wobei das Verteiler- und Sammelrohr sowie die Verbindungsstellen zwischen dem Verteiler- und Sammelrohr mit den senkrechten Rohren in einem Spritzgusswerkzeug im Spritzgussverfahren mit Kunststoff miteinander verbunden werden. Eine der vielen Möglichkeiten ist auch, dass sowohl das Verteiler und Sammelrohr, als auch die Verbindungsrohre aus Kunststoff durch Spritzgussverfahren angefertigt werden, wobei die Verbindungsrohre zusammen mit den Stahllamellen in einem Werkzeug zusammen durch Spritzguss geformt werden.

Es sind verschiedene Kombinationsmöglichkeiten gegeben, wie:
- eine Heizschlange (oder Rohrregister) und zwei Lamellen, welche von beiden Seiten die Heizschlange umfassen;
- eine Heizschlange (oder Rohmegister), die in eine übliche Plattenheizkörperschale, welche aus dünnem Blech (0,4 bis 0,8 mm) angefertigt ist, eingelegt wird. Die andere Hälfte des Rohres ist durch die Einprägungen der Lamelle umfasst;
- zwei Heizschlangen (oder Rohrregister) und vier Lamellen bilden einen Plattenheizkörper, der mit der Standardausführung Typ 22 vergleichbar ist;
- ein Heizkörper bestehend aus zwei Plattenheizkörperschalen, die aus dünnem Blech (0,4 bis 0,8 mm) angefertigt sind, wobei in den Einprägungen der beiden Schalen jeweils eine Heizschlange (oder Rohrregister) eingelegt und mit den Schalen fest verbunden ist. Die andere Hälfte des Rohres wird von den Einprägungen der Lamellen umfasst und mit ihnen fest verbunden. Damit wird ein Heizkörper aus zwei Schalen, zwei Lamellen und zwei Heizschlangen (oder Rohrregistern) geformt;
- zwei Heizschlangen (oder Rohrregister) und zwei Lamellen, wobei die Stirnseite der mittleren Lamelle von beiden Seiten so eingeprägt ist, dass jeweils ein halbes Rohr der beiden Heizschlangen (oder Rohrregister) von den Lamellen umfasst wird;
- bei jeder der o.g. Ausführungen ist es sinnvoll, die Lamellen, welche im mittleren Bereich des Heizkörpers liegen, mit Standardhöhen (wie bei Standardplattenheizkörpern 30 mm) vorzusehen und die Lamellen, welche an der Vorder- und Hinterplatte befestigt werden, mit kleineren Höhen (Rippenhöhe 18 mm) vorzusehen, damit die Temperaturen der Vorder- und Hinterplatte den größeren Wert annehmen können.

Ein erfindungsgemäßer Plattenheizkörper, wird auf die Weise aufgebaut, dass an der Stirnseite der Außenlamellen eine plane Platte durch Punktschweißen oder Verkleben mit den Lamellen fest verbunden wird.

Die Kanten der planen Platte werden in Form eines L - Profils geformt, so dass das Aufbringen der Seitendeckel und des Aufsteckgitters bei der Endmontage des Heizkörpers ermöglicht wird. Die Endmontage erfolgt nach der Pulverbeschichtung.

Vorteilhaft ist, dass die Strömungsgeschwindigkeit des Heizungswassers durch die Heizschlange konstant bleibt. Durch die richtige Auslegung der Strömungsgeschwindigkeit lässt sich der innere Wärmeübergangskoeffizient durch das Rohr in einer Größenordnung von 980 W/m² K bis 2389 W/m²K erzielen, je nach dem welche Strömungsgeschwindigkeit zu Grunde gelegt wird und welche Druckverluste in der Heizschlange in Kauf genommen werden.

Wenn die Variante mit dem Rohrregister verwendet wird, werden die Druckverluste durch die parallele Strömungsverteilung im Vergleich mit der Heizschlange wesentlich reduziert, aber die Wärmeübergangskoeffizienten vom Heizungswasser an die Rohrwand liegen wesentlich niedriger beim Rohrregister als bei der Heizschlange.

Auf Grund der dargestellten Zusammenhänge lässt sich bestimmen, dass in der Regel die Wandtemperatur der Heizschlange um 0,4 bis 1 deg. C niedriger liegt als die Temperatur des Heizungswassers.

Daraus geht hervor, dass für die Wärmeleistung eines Heizkörpers nach dieser Erfindung der Kontakt zwischen der Lamelle und der Heizschlange von entscheidender Bedeutung ist. Wenn die Lamelle nicht ausreichend an das Rohr anliegt entsteht Kontaktwiderstand, welcher sogar die Wärmeübertragung zum Einbruch führen kann. Insbesondere wenn der Spalt zwischen dem Rohr und der Lamelle kleiner ist als die freie Weglänge der Luftmoleküle. In diesem Moment kommt es bekanntlich zur verminderten Wärmeleitfähigkeit der Luft und dadurch zur Erhöhung des Wärmeübergangswiderstandes.

Zur Lösung dieses Problems werden drei Möglichkeiten gegeben und zwar
- durch Punktschweißung die Lamellen mit dem Rohr zu verbinden;
- durch das Verkleben der Lamellen mit dem Rohr mittels Wärmeleitkleber oder mit Klebeband;
- durch die feste mechanische Verbindung bzw. eine Verkoppelung der Heizschlange mit der Lamelle.

Die sinnvollste Möglichkeit von allen drei angegebenen Möglichkeiten ist das Verkleben der Heizschlange mit den Lamellen. Ein Beispiel dafür sind die von der Firma 3M unter Produktzeichen "3M Klebebänder" hergestellten Klebebänder, die auf Grund ihrer hohen Leistungsfähigkeit Verwendung in vielen Industriebereichen finden. Die Nutzung der Klebebänder lässt den Anfertigungsablauf vollständig automatisieren. Durch die Verwendung der Klebebänder werden die Unebenheiten zwischen der Lamelle und der Heizschlange eliminiert.

Die Erfindung ist in den Zeichnungen beispielweise veranschaulicht, dabei zeigen:
Fig.1: eine Prinzipskizze der Standardheizkörperausführung zur Verdeutlichung der Wärmeübergangsverhältnisse
Fig.1A zur Verdeutlichung der Fig.1
Fig.1B zur Verdeutlichung der Fig.1
Fig.1C zur Verdeutlichung der Fig.1
Fig.1D zur Verdeutlichung der Fig.1
Fig.2 : Die Grundprinzipien zur Verbindung der Lamellen mit der Heizschlange und der Lamellen mit der Front- und Hinterplatte, gemäß der Erfindung Fig.2A zur Verdeutlichung der Fig.2
Fig.2B zur Verdeutlichung der Fig.2
Fig.2G zur Verdeutlichung der Fig.2
Fig.2H zur Verdeutlichung der Fig.2

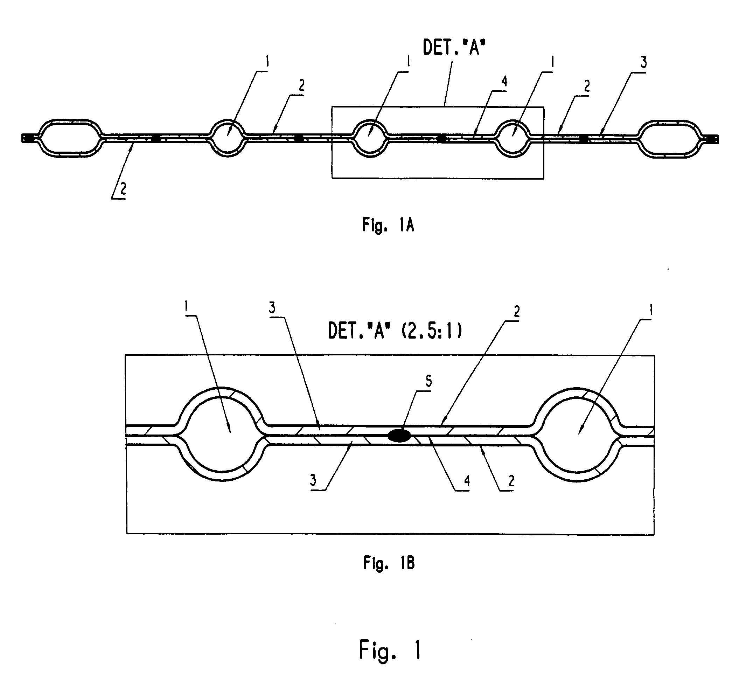

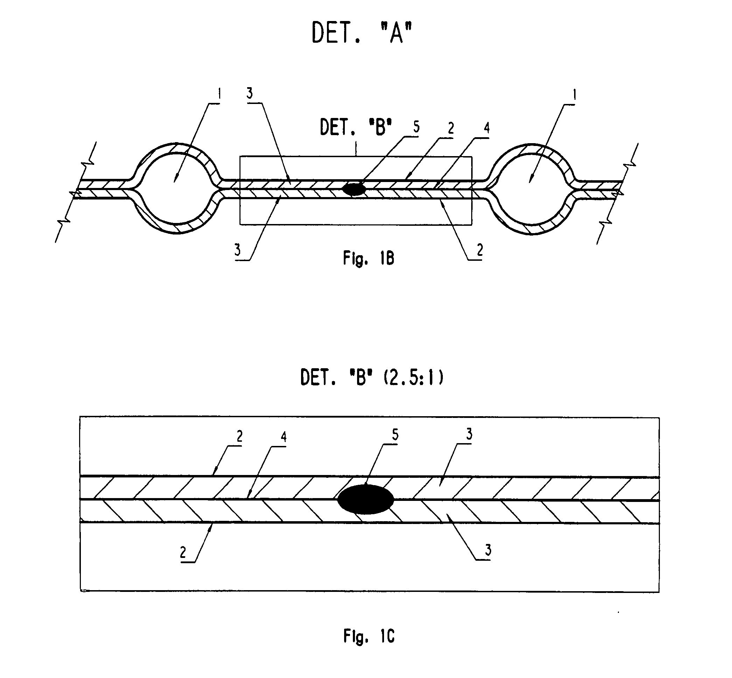

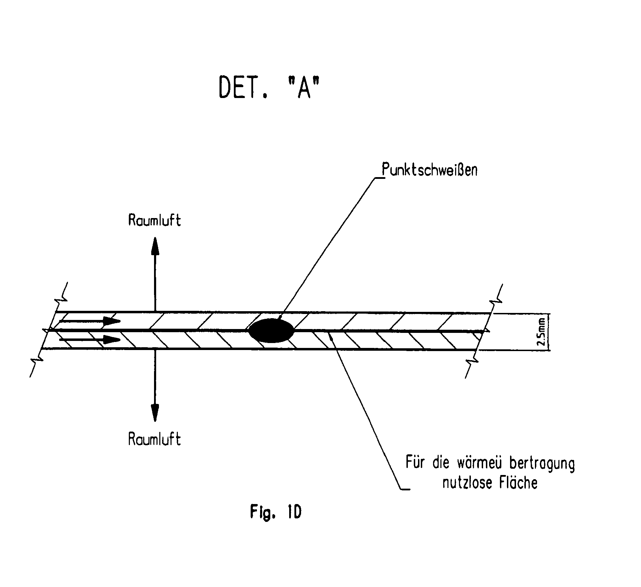

Gemäß Fig. 1 ist ein Schnitt durch den Plattenheizkörper nach Standardausführung dargestellt. Das Heizungswasser wird aus dem Verteilerkanal auf die senkrechten Kanäle 1 verteilt. Die Wärme wird vom Heizungswasser auf die Innenwand des Wasserkanals 1 übertragen sowie durch die Wärmeleitung der ebenen Fläche, die zwei eingeprägte Kanäle verbindet. Von der Außenwand des Kanals 2 wird die Wärme durch die Strahlung (60 - 65%) und durch die Konvektion (35 - 40%) an die Raumluft übertragen. Der wesentliche Anteil der Wärme wird vom ebenen Teil 2 der Schale 3 (Zwischenkanalbereich) an die Raumluft übertragen. Dies bedeutet, dass die Wärme durch die Wärmeleitung vom Wasserkanal 1 durch die Schalenwand 3 transportiert wird. Gemäß Fig.1 ist zu erkennen, dass die anliegende Fläche 4 zwischen zwei Schalen 3 für die Wärmeübertragung nutzlos ist. Hinzu kommt der Umstand, dass zwei Schalen 3 in der Verbindungsebene 4 durch viele Punkte 5 miteinander befestigt werden müssen, um dem herrschenden Druck im Wasserkanal Stand zu halten.

Aus diesem Grunde muss die Schale 3 aus Blech 1,25 mm dick angefertigt werden. Wenn ein Plattenheizkörper 1000 mm x 600 mm zu Grunde liegt, lässt sich ausrechnen, dass für zwei Heizplatten (4 Schalen) der ebene Teil 2 vom Gewicht her ca. 14 kg beträgt. Aus der Theorie der Wärmeübertragung lässt sich berechnen, dass die abgegebene Wärmemenge von einer Rippe an die vorbeiströmende Luft ca. um 6% niedriger liegt, wenn die Dicke der Rippe um 20% kleiner ist. Im Rückblick darauf, dass das technische Konzept der Standardausführung der Plattenheizkörper eine echte Materialvergeudung darstellt, liegt es gedanklich nah, nach einem neuem Konzept in dem Sinne zu suchen, dass man anstatt der Schalen, welche Wasserkanäle bilden, eine Heizschlange vorsieht, die eine Wandstärke von 0,5 - 0,8 mm hat und einen hydraulischen Druck von 50 bar aushalten kann.

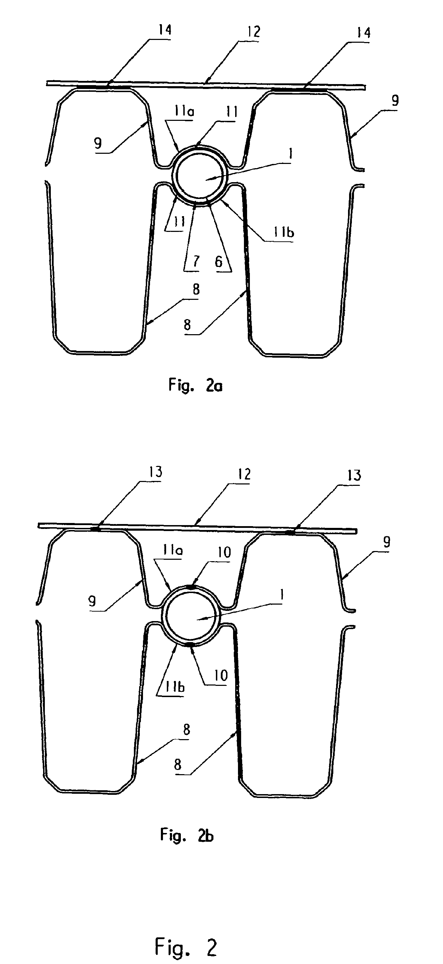

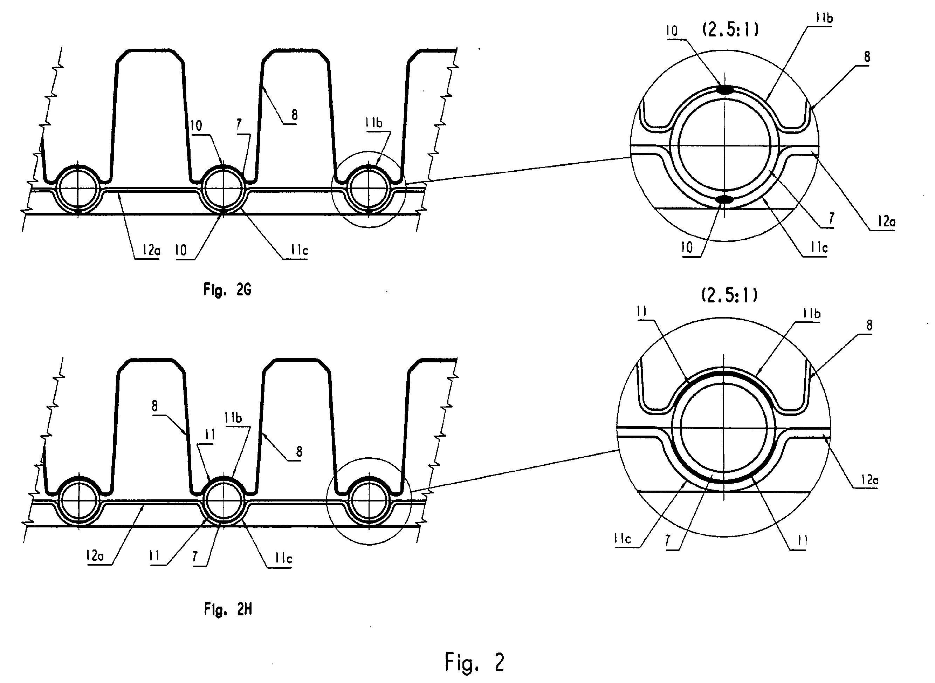

Gemäß Fig. 2 ist diese neue Idee konzeptionell dargestellt. Die Wärme wird durch die Konvektion vom Heizungswasser, welches durch das Rohr 7 strömt, auf die Innenwand 6 übertragen und durch die Wärmeleitung der Rohrwand wird die Wärme an die Außenwand des Rohres 7
transportiert. Die Grundidee dieser Erfindung ist, dass die Wärme vom Rohr 7 mittels zwei Lamellen 8 und 9, die aus dünnem Blech (0,3-0,5 mm) angefertigt werden und jeweils eine Hälfte des Rohres umfassen, entkoppelt wird.

Die Wärme wird vom Rohr 7 auf die Lamellen 8 und 9 durch die Wärmeleitung übertragen. Um die Kontaktwiderstände niedrig zu halten ist von ausschlaggebender Bedeutung, dass die Lamellen 8 und 9 mit dem Rohr 7 guten thermischen Kontakt haben. Dafür sind zwei Möglichkeiten vorgesehen; eine Möglichkeit ist, dass das Rohr 7 mit den Lamellen 8 und 9 durch Punktschweißen verbunden wird und die andere Möglichkeit ist, die Lamellen 8 und 9 mit dem Rohr 7 zu verkleben. Durch die Wärmeleitung der Lamellen 8 und 9 wird die Wärme auf die Lamellenfläche verteilt und durch die Konvektion an die Raumluft abgegeben. Wenn man davon ausgeht, dass die Wärmeleitfähigkeit des Stahls ca.40 W/m K beträgt, ergibt sich, dass die Wärmeübergangskoeffizienten durch die Wärmeleitung für beispielsweise ein Blech 0,5 mm dick oder durch eine Rohrwand gleicher Dicke um die Größenordnung 80 000 W/m² K liegen. Der konvektive Wärmeübergangskoeffizient von der Lamellenoberfläche an die Raumluft liegt in der Größenordnung 5 -10 W/m² K, in Abhängigkeit von der Strömungsgeschwindigkeit der Luft und von der Lufttemperatur.

Von den beiden dargestellten Konzepten gemäß Fig. 2a, ist die Verbindung der Lamellen 8 und 9 mit dem Rohr 7 mittels Verkleben mit der Wärmeleitpaste 11 und 14, mittels der Wärmeleitflüssigkeit oder mittels dem Klebeband 11 und 14 der herkömmlichen Art vorzuziehen. Durch Punktschweißen (Fig. 2b) 10, wird die Verbindung zwar mechanisch stabil, jedoch im molekularen Bereich bleibt immer ein Luftspalt vorhanden, der kleiner ist als die freie molekulare Weglänge, was zu einer verminderten Wärmeleitfähigkeit der Luft führt. Der wärmeleitende Klebststoff 11 und 14 hat eine Wärmeleitfähigkeit von 0,5-0,7 W/m² K. Für eine Filmdicke von 0,5 mm ergibt sich ein Wärmeübergangskoeffizient in der Größenordnung von 1000 W/m² K. Mit diesem Wärmeübergangskoeffizienten lässt sich die Wärme sehr gut transportieren.

Im Sinne dieser Erfindung ist die Möglichkeit vorgesehen, die plane Platte 12 an die Lamellen 8 und 9 durch das Punktschweißen 13 oder durch das Verkleben 14 anzubringen.

Dadurch ist die Möglichkeit gegeben, die Heizkörper ohne Presswerkzeug, ohne Pressen und ohne Nahtschweißen zu fertigen. Bei der Standardheizkörperproduktion werden die Lamellen üblicher Weise aus Blech 0,5 mm Dicke angefertigt. Die Berechnungen zeigen, dass die Lamellen 0,4 mm dick unter gleichen Bedingungen eine um 6% kleinere Wärmeleistung abgeben, dies bedeutet, wenn die Lamellenfläche um 6% vergrößert wird, wird noch immer 15,2 % an Gewicht, bezogen auf die gleiche Wärmeleistung, gespart. Wenn man die Lamellen aus Blech 0,3 mm Dicke anfertigt, wird die Wärmeleistung um 14% reduziert (bezogen auf 0,5 mm Lamellen).Um die gleiche Wärmeleistung zu erhalten, spart man noch immer 31,6 % an Gewicht.

Daraus kann man schließen, dass man durch ein geschicktes Konzept wesentliche Materialeinsparungen erzielen kann. Damit die Frontplatte 12 eine höhere Temperatur annehmen kann, ist die Lamelle 9 mit einer niedrigeren Höhe vorgesehen. Dadurch ist die Möglichkeit gegeben, dass die Frontplatte 12 die Wärme in den Wohnraum abstrahlt, womit die Bequemlichkeit im Wohnraum gewährleistet ist.

Das wesentliche Merkmal der neuen Erfindung ist, dass die Frontplatte 12 aus verschiedenen Materialien und in verschiedener Form angefertigt werden kann. Die Frontplatte 12 kann beispielsweise neben Stahl aus Kunststoff, Holz, Glas, Aluminium, Keramik oder einem anderen Material angefertigt werden. Die Frontplatte 12 kann auch für die Anfertigung von Motivheizkörpem genutzt werden.

Gemäss Fig.2 sind noch weitere Ausführungsmöglichkeiten gegeben, wie in Fig.2G und Fig.2H dargestellt.

Gemäß Fig.2G ist die Ausführungsmöglichkeit gegeben, dass für die Front und Hinterseite anstatt der planen Platte 12, die Schalen 12a aus der üblichen Plattenheizkörperproduktion genutzt werden, jedoch mit geformten Einprägungen 11 c ,die die Hälfte des Rohrumfanges 7 umfassen. Die andere Hälfte des Rohrumfanges wird von der Lamelle 8 umfasst. Dies bedeutet, dass sich der Heizkörper aus zwei Schalen 12a und zwei Lamellen 8 zusammensetzt. Die Wärme wird vom Rohr 7 durch die Wärmeleitung an die Schale 12a und auf die Lamelle 8 transportiert, wobei von der Schale 12a die Wärme durch die Strahlung und durch die Konvektion auf die Raumluft weiter abgegeben wird. Von der Lamelle 16 wird die Wärme vorwiegend durch die Konvektion an die Raumluft abgegeben. Eine Mögkichkeit ist, dass das Rohr 7 mit der Lamelle 8 und mit der Schale 12a durch das Punktschweissen verbunden wird.

Gemäss Fig.2H, ist die gleiche Ausführungsart wie in Fig.2G, jedoch ist die
Möglichkeit vorgesehen, dass das Rohr 7 mit der Schale 12a und mit der Lamelle 8 durch das Verkleben verbunden wird. Diese beiden
Ausführungen entsprechen dem Typ 22, der Standardausführung der Plattenheizkörper.

## Patentansprüche

1. Heizkörper, bestehend aus mehreren Rohrsegmenten, welche die Form einer Heizschlange oder eines Rohrregisters haben, wobei die Rohrsegmente in eingepresste Einprägungen (11a, 11b) von Lamellen (8,9,12a) eingelegt sind und Rohrsegmente und Lamellen (8,9, 12a) flächig und stoffschlüssig durch Schweißen (10) oder Kleben (11) miteinander verbunden sind, wobei an einer Stirnseite (13,14) der Lamellen (8,9,12a) auf der Frontseite und/oder an der Hinterseite des Heizkörpers eine plane Platte (12) kraftschlüssig, wie durch Punktschweißen (10), Verkleben (11) oder eine andere Art der Verbindung, angeordnet ist, wobei die Rohrsegmente jeweils zwei einander zugewandte Lamellen (8, 9, 12a) aufweisen, deren Einprägungen (11a, 11b) an den den Rohrsegmenten zugewandten Stirnseiten ausgebildet sind, **dadurch gekennzeichnet, dass** die Einprägungen etwa jeweils zur Hälfte die Rohrsegmente umfassen, wobei auf der einen Seite der Rohrsegmente eine große Lamelle (8) und an der anderen Seite eine kleine Lamelle (9) angeordnet ist dergestalt, dass die kleine Lamelle (9) mit einer niedrigeren Höhe als die große Lamelle vorgesehen ist, wobei die Platte (12) an der kleiner Lamelle auf der Frontseite des Heizkörpers angeordnet ist und die Platte (12) die Wärme in den Wohnraum abstrahlt.

2. Heizkörper nach Anspruch 1, **dadurch gekennzeichnet,**
**dass** die Lamellen (8, 9) derart ausgebildet sind, dass sie je eine Hälfte des Rohres (7) als Teil der Rohrsegmente umfassen und sich dabei verfangen bzw. aneinander anhacken.

3. Heizkörper nach einem der vorangehenden Ansprüche,
**dadurch gekennzeichnet, dass** die Lamellen (8, 9) aus dünnem Blech, vorzugsweise mit einer Stärke 0,2 bis 0,5 mm angefertigt sind.

## Claims

1. Heat radiator comprised of several pipe segments in the form of a heating coil or a pipe register, wherein the pipe segments are fitted into stamped-in indentations (11 a, 11b) of lamellas (8, 9, 12a) and pipe segments and lamellas (8, 9, 12a) are fully connected with one another under material closure by welding (10) or adhesion (11), wherein on an end face (13, 14) of the lamellas (8, 9, 12a) on the front side and/or on the backside of the heat radiator a flat plate (12) is disposed under force closure, such as spot welding (10), adhesion (11) or another type of connection, wherein each of the pipe segments comprises lamellas (8, 9, 12a) facing one another whose indentations (11a,11b) are developed on the end faces facing the pipe segments, **characterized in that** each of the indentations encompasses approximately half of the pipe segment, wherein on the one side of the pipe segments one large lamella (8) and on the other side one small lamella (9) is disposed such that the small lamella (9) is provided with a lesser height than the large lamella, with the plate (12) being disposed on the small lamella on the front side of the heat radiator and the plate (12) radiates the heat into the living space.

2. Heat radiator as in claim 1, **characterized in that** the lamellas (8, 9) are developed such that each encompasses one half of the pipe (7) as part of the pipe segments and therein become caught or hooked on one another.

3. Heat radiator as in one of the preceding claims, **characterized in that** the lamellas (8, 9) are fabricated of thin metal sheet, preferably in a thickness of 0.2 to 0.5 mm.

## Revendications

1. Radiateur, constitué de plusieurs segments tubulaires qui présentent la forme d'un serpentin ou d'un registre tubulaire, les segments tubulaires étant introduits dans des gaufrages renfoncés (11a, 11b) de lamelles (8, 9, 12a) et les segments tubulaires et les lamelles (8, 9, 12a) étant connectés les uns aux autres à plat et par liaison de matière par soudage (10) ou collage (11), une plaque plane (12) étant disposée par engagement par force, par exemple par soudage par points (10), par collage (11) ou par un autre type de liaison au niveau d'un côté frontal (13, 14) des lamelles (8, 9, 12a) sur le côté avant et/ou sur le côté arrière du radiateur, les segments tubulaires présentant à chaque fois deux lamelles tournées l'une vers l'autre (8, 9, 12a) dont les gaufrages (11a, 11b) sont réalisés au niveau des côtés frontaux tournés vers les segments tubulaires, **caractérisé en ce que** les gaufrages entourent approximativement à chaque fois la moitié des segments tubulaires, une grande lamelle (8) étant disposée sur un côté des segments tubulaires et une petite lamelle (9) étant disposée sur l'autre côté de telle sorte que la petite lamelle (9) soit pourvue d'une plus faible hauteur que la grande lamelle, la plaque (12) étant disposée au niveau de la plus petite lamelle sur le côté frontal du radiateur et la plaque (12) rayonnant la chaleur dans la pièce.

2. Radiateur selon la revendication 1, **caractérisé en ce que** les lamelles (8, 9) sont réalisées de telle sorte qu'elles entourent à chaque fois une moitié du tube (7) en tant que partie des segments tubulaires et s'engagent ou s'accrochent les unes aux autres.

3. Radiateur selon l'une quelconque des revendications précédentes, **caractérisé en ce que** les lamelles (8, 9) sont constituées de tôle mince, de préférence ayant une épaisseur de 0,2 à 0,5 mm.
